# EUROPEAN PATENT SPECIFICATION

(11) **EP 0 501 574 B1**
(45) Date of publication and mention of the grant of the patent: **19.04.1995**
(21) Application number: 92200501.2
(22) Date of filing: 21.02.1992
(51) Int. Cl.: A23G 3/02, A23G 3/12

(54) **A candy-molding machine**
Kandis-Formmaschine
Appareil de moulage pour confiserie

(30) Priority: 01.03.1991 NL 9100383
(43) Date of publication of application: 02.09.1992
(73) Proprietor: Derckx, Hendricus Antonius Jacobus Maria, NL-6006 RV Weert (NL)
(72) Inventor: Derckx, Hendricus Antonius Jacobus Maria, NL-6006 RV Weert (NL); Asma, Seferinus Jelle, NL-5503 CM Veldhoven (NL)
(74) Representative: Kooy, Leendert Willem

(56) References cited:
- DE-A- 2 643 855
- LU-A- 66 311
- NL-A- 7 904 629
- US-A- 1 785 904
- US-A- 4 168 139

## Description

The invention relates to a machine for producing candy from a mass of sugar bar or similar material as defined in the preamble of claim 1.

Such an apparatus is known from US patent specification 1,785,904. In this known machine the bar of material is radially fed to a shearing device consisting of a stationary plate having a radial inlet for the material, and a blade which transfers the cut material to an axial die-cavity of a die-disc in which the material is processed further. In a shearing device operating in this manner the material may, depending on the speed of rotation of the die-disc, either be ejected due to the centrifugal force or may on the contrary be stuck to the blade, so that the machine has to be stopped to correct the undesired situation.

It is an object of the present invention to provide a machine for producing candy from a mass of sugar bar or similar material in which the ejection of pieces of sugar bar is substantially reduced.

This object is obtained by the present invention in accordance with the characterizing part of claim 1. Due to the radially placed pressing stamps, the axial feeding of the bar of material and the flaps, material is prevented from ejecting from the die-ring.

In US-A-4,168,139 a machine for producing candy from a mass of sugar bar is disclosed in which the machine comprises a stepwise rotatable die-ring having axially arranged press rooms. The die-ring carries inner press stamps and the outer press stamps are fixed stationary and separate of the die-ring. Flaps for preventing centrifugal ejection of pieces of sugar bar are not disclosed.

Each inner pressing stamp, also called lower stamp, is mounted on the extremity of a rod being at its rear side provided with a central pressing roll and a return roll, said rolls controlling the movements of the stamps connected therewith.

A means may be applied to provide the cut piece of candy with a stick before it is discharged from the machine.

The invention will be further illustrated hereinafter on the basis of the drawing indicating, by way of example, a machine for making lollipops. In the drawing:
figure 1 shows a schematic side view of the die-ring for tongue-shaped lollipops and a supply means shown 90^{o} turned;
figure 2 shows a schematic view of the die-ring according to the bent line II-II of figure 1;
figures 3 to 6 show cross-sections at a smaller scale according to the lines III-III to VI-VI of figure 1 so as to elucidate various stages of the lollipop-making process; and
figures 7 and 8 show at the same scale as figures 1 and 2 two alternatives of the machine for making round and oval lollipops, respectively.

The machine which is schematically indicated in the drawing is used for shearing pieces of sugar 1 from a sugar bar 2, which pieces of sugar being subsequently pressed to a confectionery lollipop 3. The machine substantially consists of a supply means which is provided with two forward rollers 4 and 5, a die-ring 6 having shear-blades 7 and pairs of outer stamps 8 and inner stamps 9.

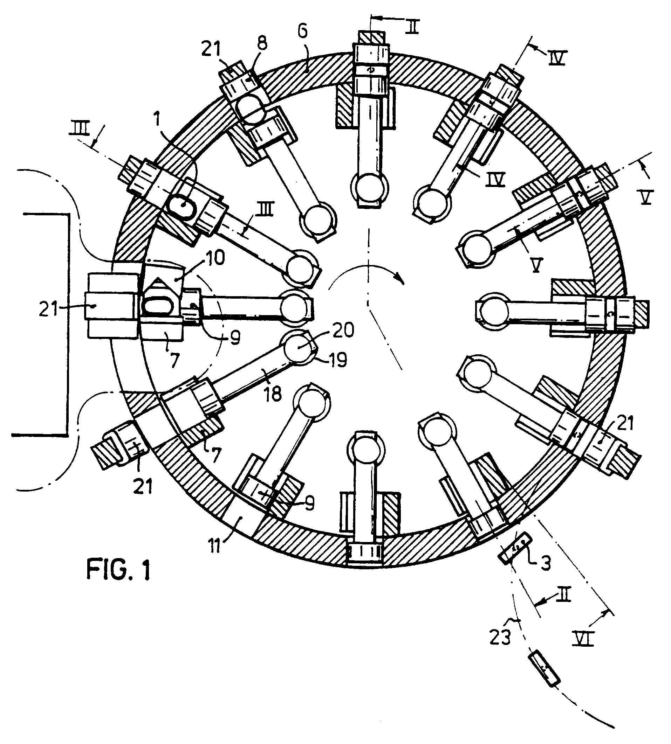

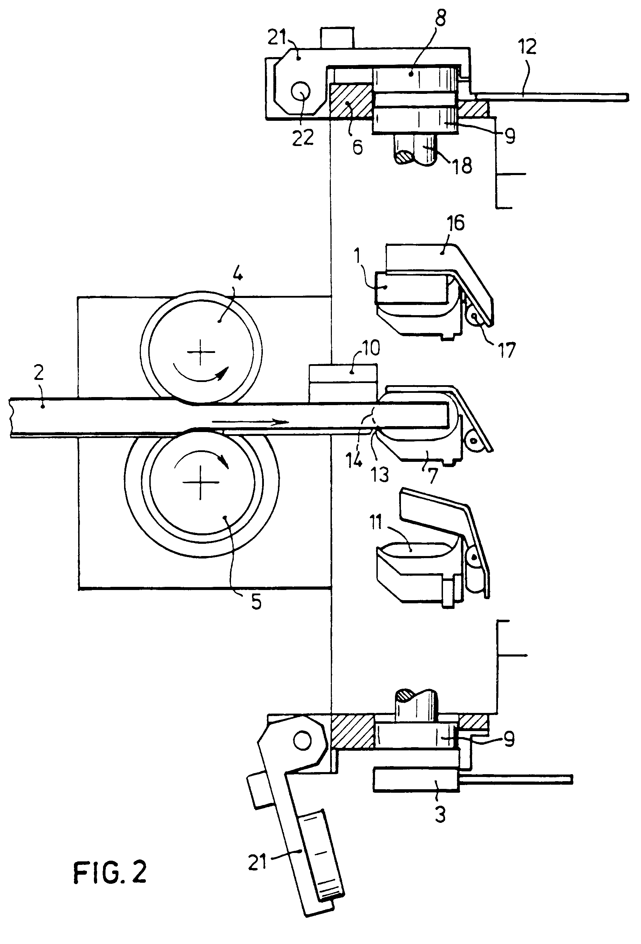

A fixed blade 10 is mounted between the forward rollers 4 and 5 and the largest path which is described by the shear-blades 7 applied in the die-ring 6. These shear-blades 7 have an appearance adapted to the appearance of the press rooms 11, in which the pressing stamps 8 and 9 can move in such a manner that the lower stamps 9 may pass the shear-blades 7. In the example shown in figures 1 and 2 twelve shear-blades 7 having a tongue-shaped cavity have been mounted on the die-ring 6 so as to let the lower stamps 9 pass. A stick 12 can be applied in a manner not specified further in order to complete the lollipop.

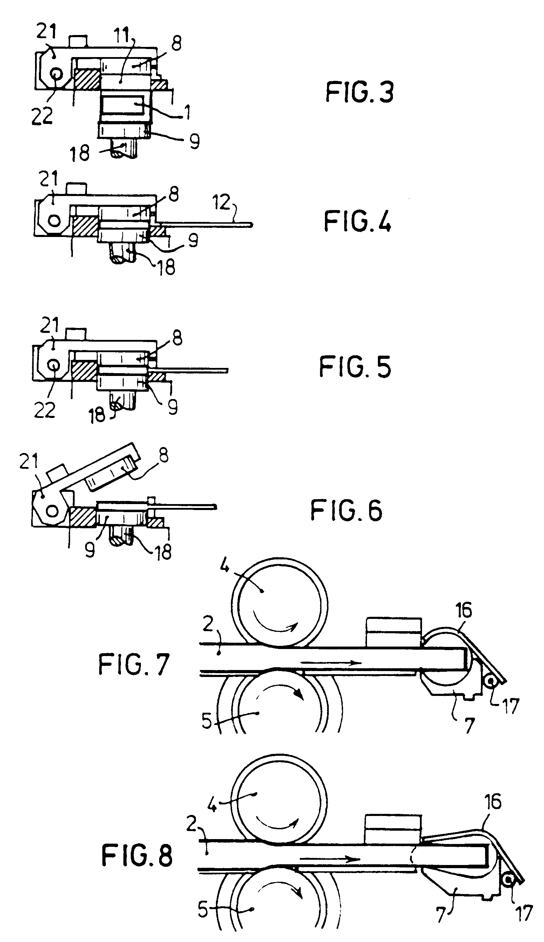

From figure 2 it appears that the shearing edge 13 of the shear-blades 7 is at the rear side with respect to the descriptive end 14 of the press room passing the supply means 4, 5 nearest. This is necessary with this embodiment, otherwise the point would become too sharp. However, there also are many other profiles of the press rooms and corresponding pressing stamps, and thus shear-blades 7 possible: figure 7 is thereby intended for producing so-called "round" lollipops, and figure 8 for producing "oval" lollipops.

The forward rollers 4 and 5 turn intermittingly round in the rotation direction of the arrows. The parts 7 and 10 are shown as the shear blades of the sugar-strand-shearing-device. As soon as shear-blade 7 has rotated past the horizontal centre line of figure 1 for some degrees, and thereby shearing a piece 1 of the sugar bar 2, the forward rolls 4 and 5 move the sugar bar 2 in the direction reciprocal the direction of rotation of said rolls. This forward movement is stopped before the next shear-blade 7 can cut off a sugar piece 1 from the sugar bar 2. Cutting off a sugar piece from the sugar bar takes place between the moving shear-blades 7 and the fixed blade 10.

In order to prevent the cut sugar piece 1 from ejecting a flap 16 is provided. Just like the shear-blade 7 this flap 16 has a cross-section corresponding with the press rooms 11. The flap 16 may rotate about a centre of rotation 17 and is usually "open", except, of course, during the time the sugar bar 2 is cut off.

The sugar piece 1 cut off from the sugar bar 2 is picked up by the shear-blade 7 and the flap 16 prevents it from ejecting. Because of the movements of the pressing stamps 8, 9 the sugar piece 1 is subsequently pressed to the desired lollipop model 3.

The lower stamps 9 are each provided on a rod 18 which at its other end is provided with a pressure roll 19 which may exercise a central compressive force on the rod 18 and therewith the lower stamp 9. Reposition is effected by a return roll 20 positioned outside the rod. The paths for controlling the rolls 19 and 20 have for clarity's sake been omitted in the drawing.

The upper stamps 8 are each mounted on a lid 21 which may pivot about a centre of rotation 22. The five lower lids 21 are open in figure 1. As a result a completed lollipop 3 can be submitted to a removing disc 23 which in figure 1 is schematically indicated by a dot and dash circle. In the bent part a lid 21 can be seen also.

The lids 21 are closed at those areas where necessary for the production process by a solid guide path, not shown.

The lollipop 3 obtains the shape of the press room 11 which is formed by the side walls of the press room and the head sides of the stamps 8 and 9. During the rotary movement of the die-ring 6 the stick 12 of the lollipop is also fed to the die-ring 6 in axial direction so as to be inserted into the lollipop.

Once the lollipop 3 is completed, the stamps 8 and 9 move into the position of figure 6 to bring the lollipop outside the press room.

For completeness' sake it is remarked that the candy to be produced by the invented machine may have all possible cross-sections, including a square cross-section.

## Claims

1. A machine for producing candy from a mass of sugar bar or similar material, said machine comprising:
a rotatable die-ring (6) having an axis of rotation and a number of circumferentially spaced, radially extending press rooms (11),
supply means (4, 5) for intermittently feeding a bar of material into the press rooms (11),
a fixed shear blade (10) positioned stationary between the supply means (4, 5) and the die-ring (6),
a same number of shear blades (7) as the number of press rooms (11), each shear blade (7) being attached to the die-ring (6) for cutting off pieces (1) of the bar of material in cooperation with the fixed shear blade (10), and
a same number of outer and inner pressing stamps (8, 9) as the number of press rooms (11), said outer and inner pressing stamps (8, 9) being carried by the die-ring (6) and being displaceable for pressing the pieces (1) of the bar of material (2),
**characterized in that** each shear blade (7) has a radial shearing edge (13),
in that the supply means (4, 5) are arranged for feeding the bar of material (2) intermittently along a path of travel in a direction parallel to the axis of rotation of the die-ring (6),
in that each outer pressing stamp (8) is mounted on a tangential centre of rotation (22),
in that each inner pressing stamp (9) is arranged for radial displacement for pressing the cut pieces (1) against its corresponding outer pressing stamp (8),
in that a same number of flaps (16) as the number of shear blades (7) is carried by the die-ring (6), each flap (16) being provided opposite its corresponding shear blade (7) and being rotatably mounted on a radial centre of rotation (17), each press room (11) being formed by the side walls of the press room and the head sides of the stamps (8) and (9)

2. A machine according to claim 1, **characterized in that** each inner pressing stamp (9) is mounted on the extremity of a rod (18) being at its rear side provided with a central press roll (1) and a return roll (20), said rolls (19, 20) controlling the movements of the stamps (9) connected therewith.

3. A machine according to claim 1 or 2, **characterized in that** a means is applied to provide the cut piece (1) with a stick (12) before it is discharged from the machine.

## Patentansprüche

1. Vorrichtung zum Herstellen von Süßigkeiten aus einer Zuckerstangenmasse oder einem ähnlichen Material, wobei die Maschine aufweist:
einen drehbaren Formring (6) mit einer Drehachse und einer Anzahl von am Umfang beabstandeten, sich radial erstreckenden Drückräumen (11),
eine Liefereinrichtung (4, 5) zum intermittierenden Zuführen einer Materialstange in die Drückräume (11),
ein fixiertes Scherblatt (10), das stationär zwischen der Liefereinrichtung (4, 5) und dem Formring (6) angeordnet ist,
eine gleiche Zahl von Scherblättern (7) wie die Zahl von Drückräumen (11), wobei jedes Scherblatt (7) an dem Formring (6) zum Abschneiden von Stücken (1) des Stangenmaterials zusammen mit dem fixierten Scherblatt (10) angeordnet ist, und
die gleiche Zahl von äußeren und inneren Drückstempeln (8, 9) wie die Zahl von Drückräumen (11), wobei die äußeren und inneren Drückstempel (8, 9) durch den Formring (6) gehalten werden und zum Drücken der Stücke (1) des Stangenmaterials (2) beweglich sind,
dadurch gekennzeichnet, daß jedes Scherblatt (7) eine radiale Scherkante (13) hat,
daß die Liefereinrichtung (4, 5) angeordnet ist, um das Stangenmaterial (2) intermittierend entlang einem Förderweg in einer Richtung parallel zu der Drehachse des Formrings (6) zuzuführen,
daß jeder äußere Drückstempel (8) auf einem tangentialen Drehzentrum (22) angeordnet ist, daß jeder innere Drückstempel (9) für eine radiale Bewegung zum Drücken der geschnittenen Stücke (1) gegen seinen entsprechenden äußeren Drückstempel (8) angeordnet ist,
daß eine gleiche Zahl von Klappen (16) wie die Zahl von Scherblättern (7) durch den Formring (6) gehalten werden, wobei jede Klappe (16) gegenüber ihrem entsprechenden Scherblatt (7) vorgesehen ist und schwenkbar auf einem radialen Drehzentrum (17) angeordnet ist und jeder Drückraum (11) durch die Seitenrollen des Drückraums und die Kopfseiten der Stempel (8) und (9) gebildet wird.

2. Vorrichtung nach Anspruch 1, dadurch gekennzeichnet, daß jeder innere Drückstempel (9) am Ende einer Stange (18) angeordnet ist, an deren Rückseite eine zentrale Drückrolle (19) und eine Rückholrolle (20) vorgesehen ist, wobei die Rollen (19, 20) die Bewegungen des damit verbundenen Stempels (9) steuern.

3. Vorrichtung nach Anspruch 1 oder 2, dadurch gekennzeichnet, daß eine Einrichtung vorgesehen ist, um das geschnittene Stück (1) mit einem Stab (12) zu versehen, bevor es aus der Maschine entfernt wird.

## Revendications

1. Machine pour la production de confiseries à partir d'une masse de sucre en barre ou d'un matériau analogue, ladite machine comprenant :
une matrice annulaire rotative (6) ayant un axe de rotation et un certain nombre de chambres de compression (11), orientées radialement et espacées sur la circonférence,
des moyens d'alimentation (4, 5) pour amener par intermittence une barre de matériau dans les chambres de compression (11),
une lame de cisaillement fixe (10) rigidement placée entre les moyens d'alimentation (4, 5) et la matrice annulaire (6),
un nombre de lames de cisaillement (7) égal au nombre des chambres de compression (11), chaque lame de cisaillement (7) étant fixée à la matrice annulaire (6) pour découper des morceaux dans la barre de matériau, en coopérant avec la lame de cisaillement fixe (10), et
un nombre de poinçons de compression intérieurs et extérieurs (8,9) égal au nombre des chambres de compression (11), lesdits poinçons de compression intérieurs et extérieurs (8,9) étant supportés par la matrice annulaire (6) et étant mobiles pour comprimer les morceaux (1) de la barre de matériau (2),
caractérisée en ce que chaque lame de cisaillement (7) comporte un bord tranchant radial (13),
en ce que les moyens d'alimentation (4,5) sont construits pour faire avancer la barre de matériau (2) par intermittence le long d'une trajectoire dont la direction est parallèle à l'axe de rotation de la matrice annulaire (6),
en ce que chaque poinçon extérieur de compression (8) est monté sur un centre de rotation tangentiel (22),
en ce que chaque poinçon de compression intérieur (9) est placé pour se déplacer radialement et comprimer les morceaux découpés (1) contre le poinçon de compression extérieur (8) correspondant,
et en ce qu'un nombre de volets (16) égal au nombre des lames de cisaillement (7) est supporté par la matrice annulaire (6), chaque volet (16) étant placé en face de sa lame de cisaillement correspondante (7) et étant monté sur un centre radial de rotation (17), chaque chambre de compression (11) étant formée par des parois latérales de chambre de compression et les faces des têtes des poinçons (8) et (9).

2. Machine selon la revendication 1, caractérisée en ce que chaque poinçon de compression intérieur (9) est monté à l'extrémité d'une tige (18) qui porte à son extrémité arrière un galet central de compression (1) et un galet de rappel (20), lesdits galets (19,20) commandant les mouvements des poinçons (9) auxquels ils sont connectés.

3. Machine selon l'une des revendications 1 ou 2, caractérisée en ce qu'un moyen est prévu pour appliquer un bâton (12) au morceau découpé (1) avant que ce dernier soit sorti de la machine.
